# EUROPÄISCHE PATENTSCHRIFT

(11) **EP 2 108 803 B1**
(45) Veröffentlichungstag und Bekanntmachung des Hinweises auf die Patenterteilung: **15.11.2017**
(21) Anmeldenummer: 08290351.9
(22) Anmeldetag: 10.04.2008
(51) Int. Cl.: F02D 41/08, B60H 1/03, F02B 67/04

(54) **Verfahren zum Heizen einer Fahrgastzelle**
Method for heating an interior of a vehicle
Procédé de chauffage d'une cellule passager

(43) Veröffentlichungstag der Anmeldung: 14.10.2009
(73) Patentinhaber: MAHLE Behr GmbH & Co. KG, 70469 Stuttgart (DE); Mahle Behr France Rouffach S.A.S., 68250 Rouffach (FR)
(72) Erfinder: Baruschke, Wilhelm, 73117 Wangen (DE); Brun, Michel, 68740 Rustenhart (FR); Gogmos, Erwan, 92800 Puteaux (FR); Kohl, Michael, 74321 Bietigheim-Bissingen (DE); Lochmahr, Karl, 71665 Vaihingen/Enz (DE); Otto, Jürgen, 71723 Grossbottwar (DE); Pitz, Eric, 70199 Stuttgart (DE); Strauss, Thomas, 73274 Notzingen (DE)
(74) Vertreter: Grauel, Andreas

(56) Entgegenhaltungen:
- EP-A- 1 369 279
- DE-A1- 3 715 194
- DE-C1- 4 335 771
- JP-A- 56 081 236
- JP-A- 63 203 410
- JP-A- S63 203 410
- US-A- 4 423 307

## Beschreibung

Die Erfindung betrifft einerseits ein Verfahren zum Heizen einer Fahrgastzelle eines Kraftfahrzeuges, bei welchem eine Heizvorrichtung einer Fahrgastzellenheizung mittels Kühlmittel einer Brennkraftmaschine des Kraftfahrzeuges erwärmt werden kann, und bei welchem eine elektrische Zuheizeinrichtung der Fahrgastzellenheizung zusätzliche Wärmeenergie zum Heizen der Fahrgastzelle zumindest dann erzeugt, wenn die Heizvorrichtung die Fahrgastzelle nur unzureichend beheizen kann.

Gattungsgemäße Verfahren und Systeme zum Ermöglichen diesbezüglicher Verfahren sind aus dem Stand der Technik hinlänglich bekannt. Insbesondere hinsichtlich verbrauchsoptimierter Kraftfahrzeuge werden Heizverfahren und Heizsysteme zum Heizen von Fahrgastzellen immer weiter entwickelt. Speziell verbrauchsoptimierte Kraftfahrzeuge erzeugen hierbei immer weniger Abwärme, welche für eine Erwärmung eines Innenraumes eines Kraftfahrzeuges zur Verfügung steht. Dies macht sich besonders bei niedrigen Umgebungstemperaturen bzw. Außentemperaturen bemerkbar, so dass oftmals ein Zuheizen mit zumindest kurzzeitig eingesetzten zusätzlichen Zuheizeinrichtungen erforderlich ist, um einen gewünschten Klimakomfort in einer Fahrgastzelle schnell bereit stellen zu können. Vor allem während einer Warmlaufphase einer Brennkraftmaschine, in einem Schwachlastbetrieb der Brennkraftmaschine, beispielsweise im Stadtverkehr, oder in einem Leerlaufbetrieb der Brennkraftmaschine, kann ein Heizbedarf mit der Hauptheizung eines Heizsystems oftmals nicht mehr ausreichend abgedeckt werden.

Um ein solches Heizdefizit vermeiden oder zumindest vermindern zu können, gibt es bereits verschiedene Möglichkeiten, die Hauptheizung mittels Zuheizeinrichtungen, wie etwa mittels Brennstoffzuheizer, elektrischer Zuheizer für Kühlmittel der Hauptheizung (kühlmittelseitiger Zuheizer) oder für Lüftungsluft (luftseitiger Zuheizer), Abgaswärmeübertrager usw., zu unterstützen. Durch derartige Zuheizeinrichtungen kann eine komfortable Innenraumtemperatur der Fahrgastzelle schneller erreicht werden.

Die elektrische Zuheizung hinsichtlich einer Lüftungsluft erweist sich hierbei als die meist sinnvollste der genannten Möglichkeiten, da geeignet elektrisch betriebene Heizelemente, wie etwa PTC-Elemente, unmittelbar in einem der Fahrgastzelle zugeführten Luftstrom angeordnet werden können, so dass sich die Luft sofort gut und spürbar erwärmen kann. Da derartige PTC-Elemente gut bekannt sind, wird vorliegend auf deren Aufbau und Funktionsweise nicht weiter eingegangen. Zudem ist eine Zuheizeinrichtung auf Basis von PTC-Elementen sehr Platz sparend und relativ kostengünstig realisierbar. Somit nimmt der Anteil an luftseitigen Zuheizern stetig zu. In der Regel erfolgt eine Umwandlung von elektrischer Energie hierbei aus einem Gleichspannungsnetz eines Kraftfahrzeugbordnetzes. Das Bereitstellen einer ausreichenden elektrischen Energie zum optimalen Betreiben eines elektrischen Zuheizers kann jedoch insbesondere bei niedrigen Drehzahlen eines Generators zum Speisen des Gleichspannungsnetzes mit elektrischer Energie kaum gewährleistet werden. So kann in vielen Fällen, wenn das vorstehend beschriebene Heizdefizit vorliegt bzw. am Größten ist, der elektrische Zuheizer nicht in optimaler Weise genutzt werden, obwohl eine entsprechend hohe Heizleistung erforderlich wäre. Somit können selbst mit elektrischen Zuheizern ausgestattete Fahrgastzellenheizungen oftmals noch nicht optimal betrieben werden.

Die Druckschrift JP 56 081236 A und JP 63 203410 A offenbaren ein Verfahren nach dem Oberbegriff von Anspruch 1.

Es ist Aufgabe vorliegender Erfindung eine Methode zu finden, mittels welcher eine Fahrgastzellenheizung effizienter betrieben werden kann, insbesondere dann, wenn eine hohe Heizleistung einer elektrischen Zuheizeinrichtung der Fahrgastzellenheizung erforderlich ist.

Die Aufgabe der Erfindung wird von einem Verfahren gemäß Anspruch 1 gelöst.

Dabei wird vorliegend die Drehzahl der Brennkraftmaschine des Kraftfahrzeuges hinsichtlich des elektrischen Bedarfs der elektrischen Zuheizeinrichtung automatisch angepasst, wenn von der elektrischen Zuheizeinrichtung mehr elektrische Energie gefordert wird. Dies ist insbesondere dann vorteilhaft, sobald an der elektrischen Zuheizeinrichtung ein Bedarf an elektrischer Energie besteht, welche auf Grund einer zu niedrigen Brennkraftmaschinendrehzahl mittels eines von der Brennkraftmaschine angetriebenen Generators nicht erbracht werden kann.

Somit kann in jedem Einstellzustand der Fahrgastzellenheizung und unabhängig vom Fahrbetrieb des Kraftfahrzeuges die elektrische Zuheizeinrichtung idealerweise optimal betrieben werden, so dass die Fahrgastzelle besonders schnell erwärmt werden kann.

Mit dem Begriff "unabhängig eines Fahrbetriebs" ist vorliegend beschrieben, dass die Drehzahl der Brennkraftmaschine insbesondere automatisch angehoben wird, sofern die anliegende Drehzahl der Brennkraftmaschine insbesondere noch nicht ausreichend hoch gewählt ist, um eine von der elektrischen Zuheizeinrichtung geforderten Energie bereit stellen zu können.

Mit der Umschreibung "automatisch" wird beschrieben, dass es zum Anpassen der Brennkraftmaschinendrehzahl ein manuelles Eingreifen eines Fahrgastes nicht bedarf. Vorzugsweise kann ein Verändern bzw. Anpassen der Brennkraftmaschinendrehzahl hinsichtlich der elektrischen Zuheizeinrichtung von einem entsprechend modifizierten Motormanagement vorgenommen werden.

Der Begriff "Fahrgastzellenheizung" beschreibt jegliche Heizungssysteme, mittels welchen eine Fahrgastzelle eines Kraftfahrzeuges beheizt werden kann. Als Hauptheizung eines derartigen Heizsystems dient hierbei vorzugsweise eine Heizvorrichtung, welche einen Wärmeübertrager umfasst, der Wärmeenergie aus einem Kühlmittelkreislauf einer Brennkraftmaschine entnehmen kann, wobei der Wärmeübertrager der Heizvorrichtung von Luft durchströmt werden kann, welches sich hierbei erwärmt. Diese erwärmte Luft wird anschließend im einfachsten Fall unmittelbar der Fahrgastzelle zugeführt. Es versteht sich, dass die vorliegende Fahrgastzellenheizung ein Bestandteil einer Klimaanlage eines Kraftfahrzeuges sein kann.

Als "elektrische Zuheizeinrichtung" kann jegliche Einrichtung verwendet werden, mittels welcher elektrische Energie in nutzbare Wärmeenergie umgewandelt werden kann, welche dann in einem Heizsystem eines Kraftfahrzeuges zur mittelbaren bzw. unmittelbaren Beheizung einer Fahrgastzelle eingesetzt werden kann.

Da das vorstehend beschriebene automatische Anpassen nur bei einem erhöhten Bedarf an elektrischer Energie an der elektrischen Zuheizeinrichtung erforderlich ist, wird zum Erhöhen der Heizleistung der elektrischen Zuheizeinrichtung unabhängig eines Fahrbetriebs des Kraftfahrzeuges die Drehzahl der Brennkraftmaschine automatisch angehoben. Es versteht sich, dass eine Reduzierung der Drehzahl erfolgt, sobald die elektrische Zuheizeinrichtung eine entsprechend geringere oder gar keine Heizleistung erbringen muss. Diese Reduzierung trifft jedoch nur zu, falls eine hiervon abweichende Drehzahl nicht auf Grund eines sonstigen Fahrbetriebs priorisiert eingestellt ist bzw. wird.

Eine vorteilhafte Verfahrensvariante sieht vor, dass zum Erhöhen der Heizleistung der elektrischen Zuheizeinrichtung die Leerlaufdrehzahl der Brennkraftmaschine automatisch angehoben wird. Insbesondere bei einer werksseitig voreingestellten Leerlaufdrehzahl steht oftmals nicht genügend elektrische Energie in einem elektrischen Kraftfahrzeugbordnetz zur Verfügung, um die elektrische Zuheizeinrichtung mit optimaler Heizleistung betreiben zu können. Insbesondere dann nicht, wenn darüber hinaus noch weitere elektrische Verbraucher, wie beispielsweise eine Sitzheizung, aktiviert sind.

Es ist vorgesehen, dass zum Erhöhen der Heizleistung der elektrischen Zuheizeinrichtung unabhängig eines Fahrbetriebs des Kraftfahrzeuges die Drehzahl eines Zuheizeinrichtungsgenerators des Kraftfahrzeuges automatisch angehoben wird. Es versteht sich, dass zum Bereitstellen von zusätzlicher elektrischer Energie für die elektrische Zuheizeinrichtung auch bereits vorhandene Generatoren genutzt werden können, die insbesondere von der Brennkraftmaschine angetrieben werden. Es ist ein Zuheizeinrichtungsgenerator vorgesehen, der kumulativ zu übrigen Generatoren elektrische Energie bereit stellen kann.

Zum Einstellen bzw. zum Erhöhen der Heizleistung der elektrischen Zuheizeinrichtung wird die Drehzahl der Brennkraftmaschine und/oder eines Generators in Abhängigkeit eines Heizleistungsanforderungssignals eines Bediengerätes der Fahrgastzellenheizung automatisch verändert bzw. automatisch angehoben. Insbesondere anhand des Heizleistungsanforderungssignals des Bediengerätes kann der tatsächliche Heizleistungsbedarf der elektrischen Zuheizeinrichtung gut ermittelt werden.

Wird zum Einstellen bzw. zum Erhöhen der Heizleistung der elektrischen Zuheizeinrichtung die Umgebungstemperatur außerhalb des Kraftfahrzeuges bzw. der Fahrgastzelle ermittelt, kann die Heizleistung der elektrischen Zuheizeinrichtung besonders bedarfsgerecht betrieben werden, da anhand der Umgebungstemperatur zusätzliche Rückschlüsse auf einen zusätzlichen Heizbedarf gezogen werden können. Zum Einstellen bzw. zum Erhöhen der Heizleistung der elektrischen Zuheizeinrichtung, die Drehzahl der Brennkraftmaschine und/oder eines Generators wird in Abhängigkeit eines Umgebungstemperatursignals des Kraftfahrzeuges bzw. der Fahrgastzelle automatisch verändert bzw. automatisch angehoben.

Es wird zum Einstellen bzw. zum Erhöhen der Heizleistung der elektrischen Zuheizeinrichtung die Innentemperatur innerhalb des Kraftfahrzeuges bzw. der Fahrgastzelle kumulativ ermittelt, so dass die elektrische Zuheizeinrichtung besonders effektiv geregelt werden kann, da zum Einstellen der Heizleistung zusätzliche Informationen zu der Innentemperatur verwendet werden können.

Eine besonders bevorzugte Verfahrensvariante sieht vor, dass zum Einstellen bzw. zum Erhöhen der Heizleistung der elektrischen Zuheizeinrichtung die Drehzahl der Brennkraftmaschine und/oder eines Generators in Abhängigkeit eines Umgebungstemperatursignals des Kraftfahrzeuges bzw. der Fahrgastzelle und/oder in Abhängigkeit eines Heizleistungsanforderungssignals eines Bediengerätes der Fahrgastzellenheizung derart automatisch angehoben wird, dass an der elektrischen Zuheizeinrichtung eine Heizleistung von mehr als 1,5 kW, vorzugsweise von mehr als 2 kW, eingestellt werden kann. Insbesondere eine Heizleistung der elektrischen Zuheizeinrichtung von mehr als 2 kW ist in der Fahrgastzelle vorteilhafter Weise sofort merklich spürbar, da eine derartige Heizleistung eine Heizluft besonders schnell und gut auf 20 °C bis 30 °C erwärmen kann. Insbesondere ist hierdurch eine schnelle Entfrostung der Kraftfahrzeugscheiben möglich.

Weitere Vorteile, Ziele und Eigenschaften vorliegender Erfindung werden anhand nachfolgender Beschreibung anliegender Zeichnung erläutert, in welcher beispielhaft ein Leistungsdiagramm eines Generators dargestellt ist.

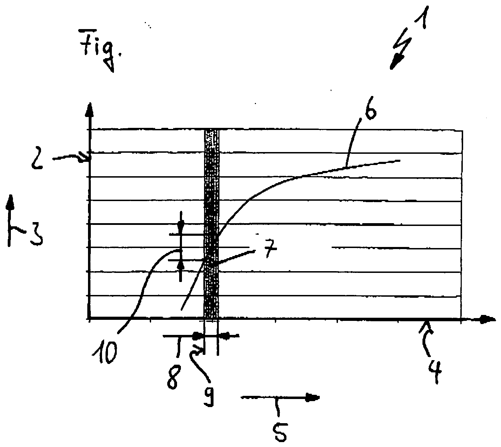

Es zeigt
- die einzige Figur: schematisch ein Leistungsdiagramm eines Generators hinsichtlich seiner Generatorleistung in Abhängigkeit einer Brennkraftmaschinendrehzahl.

Das in der einzigen Figur gezeigte Leistungsdiagramm 1 bezieht sich auf einen Generator zum Erzeugen elektrischer Energie an einem Kraftfahrzeug. An der Ordinate 2 des Leistungsdiagramms 1 ist eine erzielbare Generatorleistung 3 des Generators eingetragen. An der Abszisse 4 des Leistungsdiagramms 1 ist eine hierfür erforderliche Brennkraftmaschinendrehzahl 5 eingetragen. Im Leistungsdiagramm 1 ist eine Leistungskurve 6 des Generators hinsichtlich der erzielbaren Generatorleistung 3 in Abhängigkeit der Brennkraftmaschinendrehzahl 5 eingetragen, wobei in diesem Ausführungsbeispiel die Brennkraftmaschinendrehzahl 5 und eine Generatordrehzahl in einem festen Verhältnis zueinander stehen.

Darüber hinaus ist in dem Leistungsdiagramm 1 ein horizontaler Balken 7 eingezeichnet, der eine erste vorteilhafte Drehzahlerhöhung 8 der Brennkraftmaschinendrehzahl 5 illustriert, inwiefern eine Leerlaufdrehzahl 9 der Brennkraftmaschine des Kraftfahrzeuges problemlos erhöht werden kann.

Aus dem Zusammenhang des horizontalen Balkens 7 und der Leistungskurve 6 ergibt sich eine erzielbare Leistungssteigerung 10 an elektrischer Energie des Generators, welche zusätzlich an einer elektrischen Zuheizeinrichtung zum Heizen einer Fahrgastzelle des Kraftfahrzeuges zur Verfügung stehen kann.

Allein eine derartige Drehzahlerhöhung 8 der Brennkraftmaschinendrehzahl 5 kann ausreichen, um die elektrische Zuheizeinrichtung nahe einem oder in einem optimalen Leistungsbereich zu betreiben.

## Patentansprüche

1. Verfahren zum Heizen einer Fahrgastzelle eines Kraftfahrzeuges, bei welchem eine Heizvorrichtung einer Fahrgastzellenheizung mittels Kühlmittel einer Brennkraftmaschine des Kraftfahrzeuges erwärmt werden kann, und bei welchem eine elektrische Zuheizeinrichtung der Fahrgastzellenheizung zusätzliche Wärmeenergie zum Heizen der Fahrgastzelle zumindest dann erzeugt, wenn die Heizvorrichtung die Fahrgastzelle nur unzureichend beheizen kann, wobei zum Erbringen einer geforderten Heizleistung der elektrischen Zuheizeinrichtung unabhängig eines Fahrbetriebs des Kraftfahrzeuges die Drehzahl (5) der Brennkraftmaschine automatisch verändert wird, wobei zum Erhöhen der Heizleistung der elektrischen Zuheizeinrichtung die Drehzahl (5) der Brennkraftmaschine und/oder eines Generators in Abhängigkeit eines Heizleistungsanforderungssignals eines Bediengerätes der Fahrgastzellenheizung und in Abhängigkeit eines Umgebungstemperatursigrials des Kraftfahrzeuges bzw. der Fahrgastzelle automatisch angehoben wird, **dadurch gekennzeichnet, dass** zum Erhöhen der Heizleistung der elektrischen Zuheizeinrichtung weiterhin die Innentemperatur innerhalb des Kraftfahrzeuges bzw. der Fahrgastzelle ermittelt wird, da zum Einstellen der Heizleistung zusätzliche Informationen zu der Innentemperatur verwendet werden, wobei eine Reduzierung der Drehzahl erfolgen kann, sobald die elektrische Zuheizeinrichtung eine entsprechend geringere oder gar keine Heizleistung erbringen muss, wobei zum Erhöhen der Heizleistung der elektrischen Zuheizeinrichtung unabhängig eines Fahrbetriebs des Kraftfahrzeuges die Drehzahl eines Zuheizeinrichtungsgenerators des Kraftfahrzeuges automatisch angehoben wird, wobei der Zuheizeinrichtungsgenerator vorgesehen ist, der kumulativ zu übrigen Generatoren elektrische Energie bereit stellt.

2. Verfahren nach Anspruch 1, **dadurch gekennzeichnet, dass** zum Erhöhen der Heizleistung der elektrischen Zuheizeinrichtung die Leerlaufdrehzahl (9) der Brennkraftmaschine automatisch angehoben wird.

## Claims

1. A method for heating a passenger compartment of a motor vehicle, wherein a heating device of a passenger compartment heater is able to be heated via cooling means of an internal combustion engine of the motor vehicle, and wherein an electric auxiliary heater of the passenger compartment heater generates additional heating energy for heating the passenger compartment at least if the heating device is only able to heat the passenger compartment in an insufficient manner, wherein the speed (5) of the internal combustion engine is automatically changed independent of a drive mode of the motor vehicle in order to provide a requested heating power of the electrical auxiliary heater, wherein, in order to increase the heating power of the electric auxiliary heater, the speed (5) of the internal combustion engine and/or of a generator is automatically raised dependent on a heating power requirement signal of an operating device of the passenger compartment heater and dependent on an ambient temperature signal of the motor vehicle or of the passenger compartment, **characterised in that**, in order to increase the heating power of the electric auxiliary heater, the internal temperature within the motor vehicle or the passenger compartment is further determined because additional information about the internal temperature is used in order to adjust the heating power, wherein the speed may be reduced as soon as the electric auxiliary heater has to produce a correspondent smaller or even no heating power, wherein, in order to increase the heating power of the electric auxiliary heater, the speed of an auxiliary heater generator of the motor vehicle is automatically increased independent of a drive mode of the motor vehicle, wherein the auxiliary heater generator which provides electric energy cumulative to other generators is provided.

2. The method according to claim 1, **characterised in that**, in order to increase the heating power of the electric auxiliary heater, the idle speed (9) of the internal combustion engine is automatically raised.

## Revendications

1. Procédé de chauffage d'un habitacle de passagers d'un véhicule automobile, procédé au cours duquel un dispositif de chauffage d'un chauffage de l'habitacle des passagers peut être chauffé au moyen d'un liquide de refroidissement d'un moteur à combustion interne d'un véhicule automobile, et procédé au cours duquel un dispositif de chauffage auxiliaire électrique du chauffage de l'habitacle des passagers produit alors au moins une énergie de chaleur supplémentaire pour le chauffage de l'habitacle des passagers, ladite énergie de chaleur étant produite quand le dispositif de chauffage ne peut chauffer l'habitacle des passagers que de façon insuffisante, où, pour apporter une puissance du chauffage qui est exigée concernant le dispositif de chauffage auxiliaire électrique, indépendamment d'un mode de conduite du véhicule automobile, la vitesse de rotation (5) du moteur à combustion interne est modifiée automatiquement, où, pour augmenter la puissance de chauffage du dispositif de chauffage auxiliaire électrique, la vitesse de rotation (5) du moteur à combustion interne et / ou d'un générateur est accrue automatiquement en fonction d'un signal de demande de puissance de chauffage d'une unité de commande du chauffage de l'habitacle des passagers et en fonction d'un signal de température ambiante du véhicule automobile ou de l'habitacle des passagers, **caractérisé en ce que**, pour augmenter la puissance de chauffage du dispositif de chauffage auxiliaire électrique, la température intérieure est en outre déterminée à l'intérieur du véhicule automobile ou de l'habitacle des passagers car, pour le réglage de la puissance de chauffage, des informations supplémentaires concernant la température intérieure sont utilisées, où une réduction de la vitesse de rotation peut se produire, dès que le dispositif de chauffage auxiliaire électrique doit fournir, de façon correspondante, une puissance de chauffage plus faible ou même ne fournir aucune puissance de chauffage, où, pour augmenter la puissance de chauffage du dispositif de chauffage auxiliaire électrique, la vitesse de rotation d'un générateur d'un dispositif de chauffage auxiliaire du véhicule automobile est accrue automatiquement, indépendamment d'un mode de conduite du véhicule automobile, où il est prévu le générateur du dispositif de chauffage auxiliaire qui, de façon cumulative par rapport à d'autres générateurs, fournit de l'énergie électrique.

2. Procédé selon la revendication 1, **caractérisé en ce que**, pour augmenter la puissance de chauffage du dispositif de chauffage auxiliaire électrique, la vitesse de rotation au ralenti (9) du moteur à combustion interne est accrue automatiquement.
